# EUROPEAN PATENT SPECIFICATION

(11) **EP 3 613 590 B1**
(45) Date of publication and mention of the grant of the patent: **12.01.2022**
(21) Application number: 18787655.2
(22) Date of filing: 11.04.2018
(51) Int. Cl.: B32B 25/08, B60C 1/00, C08K 5/3495, C08L 9/00, C08L 61/06, C08L 61/28, C08L 77/00, B32B 27/28, B32B 27/08, B32B 25/14, B32B 27/34, B32B 25/12, B32B 25/16, B32B 25/18, B32B 27/26, C08G 69/40, C08L 7/00, C08L 9/06, C08L 77/02, B60C 5/14

(54) **LAMINATE AND METHOD FOR PRODUCING PNEUMATIC TIRE**
LAMINAT UND VERFAHREN ZUR HERSTELLUNG EINES LUFTREIFENS
STRATIFIÉ ET PROCÉDÉ DE PRODUCTION DE BANDAGE PNEUMATIQUE

(30) Priority: 18.04.2017 JP 2017082005
(43) Date of publication of application: 26.02.2020
(73) Proprietor: The Yokohama Rubber Co., Ltd., Minato-ku Tokyo 105-8685 (JP)
(72) Inventor: SHIBATA, Hirokazu, Hiratsuka-shi Kanagawa 254-8601 (JP); TANNO, Atsushi, Hiratsuka-shi Kanagawa 254-8601 (JP)
(74) Representative: Hoffmann Eitle
(86) International application number: PCT/JP2018/015277
(87) International publication number: WO 2018/193941

(56) References cited:
- WO-A1-2013/061646
- WO-A1-2016/143667
- WO-A1-2017/033956
- JP-A- S6 173 738
- JP-A- 2003 320 618
- JP-A- 2007 138 020
- JP-A- 2009 291 962
- JP-A- 2010 111 817
- JP-A- 2013 521 360
- JP-A- 2014 507 319
- JP-A- 2016 199 689
- US-A1- 2013 078 477
- US-A1- 2013 295 309

## Description

### FIELD

The present invention relates to a laminate comprising a layer of a polyimide resin and a layer of an unvulcanized rubber composition, and a method for producing a pneumatic tire using the laminate.

### BACKGROUND

Polyimide resins have been known to be excellent in properties such as toughness, heat resistance, gas barrier properties, and chemical stability. Accordingly, if a polyimide resin shaped article can be bonded to a different material, a composite having excellent properties of the polyimide resin can be obtained, and as a result, the use of the polyimide resin can be expanded. For example, in order for a polyimide resin to serve as a reinforcing material for a pneumatic tire, it is necessary to adhere the polyimide resin to a rubber member which constitutes the tire. Patent Literature 1 discloses a resin composition that adheres to a polyimide shaped article in the form of a film, etc., and contains 80 to 100% by weight of a polyamide polyether elastomer. US2013078477A1 discloses a pneumatic tire comprising a laminate composed of a film of a thermoplastic resin or a thermoplastic elastomer composition, and a layer of a rubber composition, wherein the rubber composition comprises 100 parts by weight of a rubber component, 0.5 to 20 parts by weight of a condensate between a phenol compound and formaldehyde, 0.25 to 200 parts by weight of a methylene donor, and a vulcanizing agent.

### CITATION LIST

### PATENT LITERATURE

Patent Literature 1: Japanese Patent Publication No. 5835231

### SUMMARY

### TECHNICAL PROBLEM

However, a technique for joining a layer of a polyimide resin and a layer of a rubber composition without using an adhesive has not been proposed so far. Further, the resin composition disclosed in Patent Document 1, which comprises a polyamide-polyether elastomer at a high proportion, i.e., 80 to 100% by weight, does not exhibit adhesiveness depending on the type of rubber component of the adherent.

Therefore, an object of the present invention is to provide a laminate comprising a layer of a polyimide resin and a layer of an unvulcanized rubber composition that can be joined together without adhesive, and a method for producing a pneumatic tire using the laminate.

### SOLUTION TO PROBLEM

The inventors have found that a rubber composition comprising a rubber component, a polyamide-polyether elastomer in a specific amount with respect to the rubber component, a condensate of a specific phenolic compound with formaldehyde, and a methylene donor exhibits excellent adhesion properties to a polyimide resin, and consequently have completed the present invention.

That is, according to the present invention, there is provided a laminate comprising a layer of a polyimide resin and a layer of an unvulcanized rubber composition, wherein the unvulcanized rubber composition comprises:
(A) a rubber component,
(B) 20 to 100 parts by weight of a polyamide-polyether elastomer with respect to 100 parts by weight of the rubber component (A),
(C) a condensate of a substituted or unsubstituted phenolic compound represented by the following formula (1):

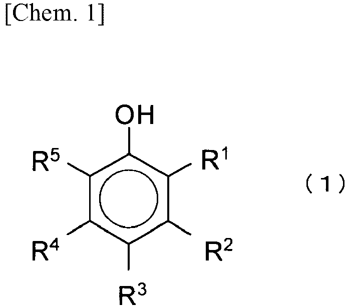

wherein R¹, R², R³, R⁴ and R⁵ are independently selected from the group consisting of hydrogen, hydroxyl group, alkyl groups having 1 to 8 carbon atoms, hydroxyalkyl groups having 1 to 8 carbon atoms, and alkoxide groups having 1 to 8 carbon atoms, with formaldehyde,
(D) a methylene donor, and
(E) a vulcanizing agent.

According to the present invention, there is also provided a method for producing a pneumatic tire comprising forming a green tire comprising the laminate as described above, and vulcanizing the green tire.

Specifically, the present invention encompasses Embodiments 1 to 8 below.

### [Embodiment 1]

A laminate comprising a layer of a polyimide resin and a layer of an unvulcanized rubber composition, wherein the unvulcanized rubber composition comprises:
(A) a rubber component,
(B) 20 to 100 parts by weight of a polyamide-polyether elastomer with respect to 100 parts by weight of the rubber component (A),
(C) a condensate of a substituted or unsubstituted phenolic compound represented by the following formula (1): 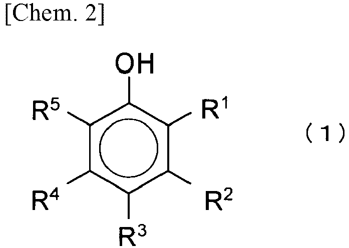 wherein R¹, R², R³, R⁴ and R⁵ are independently selected from the group consisting of hydrogen, hydroxyl group, alkyl groups having 1 to 8 carbon atoms, hydroxyalkyl groups having 1 to 8 carbon atoms, and alkoxide groups having 1 to 8 carbon atoms, with formaldehyde,
(D) a methylene donor, and
(E) a vulcanizing agent.

### [Embodiment 2]

The laminate according to Embodiment 1 above, wherein the amount of the condensate (C) is from 0.5 to 10 parts by weight with respect to 100 parts by weight of the rubber component (A), the amount of the methylene donor (D) is from 0.25 to 50 parts by weight with respect to 100 parts by weight of the rubber component (A), and the weight ratio of the methylene donor (D) to the condensate (C) is from 0.5:1 to 5:1.

### [Embodiment 3]

The laminate according to Embodiment 1 or 2 above, wherein the methylene donor (D) is at least one selected from the group consisting of modified etherified methylolmelamines, paraformaldehyde, hexamethylenetetramine, pentamethylenetetramine, and hexamethoxymethylmelamine.

### [Embodiment 4]

The laminate according to any one of Embodiments 1 to 3 above, wherein the polyamide-polyether elastomer (B) is a copolymer comprising a hard segment containing an aliphatic polyamide and a soft segment containing an aliphatic polyether.

### [Embodiment 5]

The laminate according to any one of Embodiments 1 to 4 above, wherein the condensate (C) is represented by formula (2): 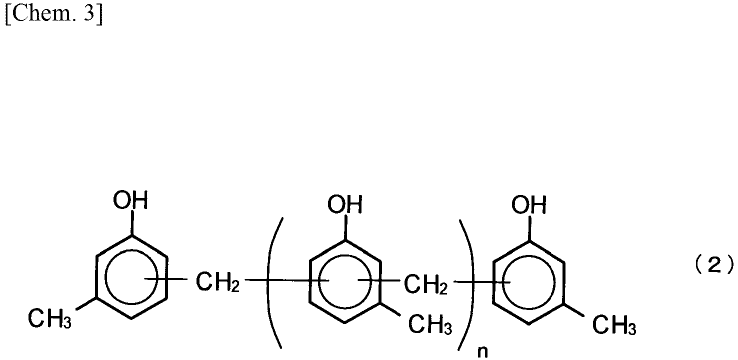 wherein n is an integer of 1 to 20; or
formula (3): 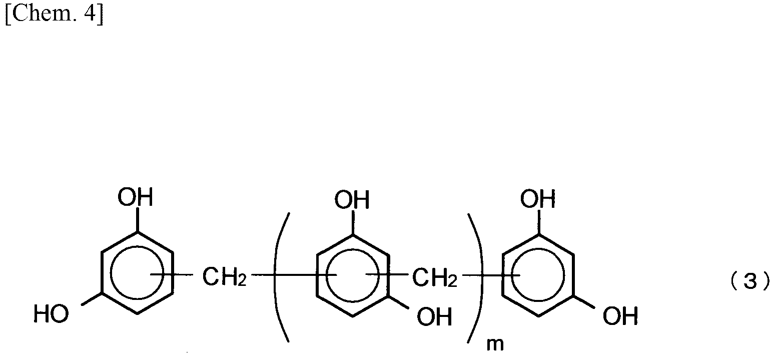 wherein m is an integer of 1 to 20.

### [Embodiment 6]

The laminate according to any one of Embodiments 1 to 5 above, wherein the rubber component (A) is a diene rubber.

### [Embodiment 7]

A method for producing a pneumatic tire comprising:
forming a green tire comprising the laminate according to any one of Embodiments 1 to 6 above, and
vulcanizing the green tire.

### ADVANTAGEOUS EFFECTS OF INVENTION

The laminate according to the present invention can develop a high adhesion strength between the layer of the polyimide resin and the layer of the unvulcanized rubber composition by heating the laminate at a predetermined temperature described later, even though an adhesive is not applied between the layer of the polyimide resin and the layer of the unvulcanized rubber composition. Since the laminate according to the present invention does not contain an adhesive, the equipment and operations required for adhesive application can be eliminated, and therefore the laminate according to the present invention can be produced more easily than the conventional technique using an adhesive. Further, the laminate according to the present invention does not require a surface treatment of the polyimide resin layer in advance for improving adhesion properties.

Since polyimide resins are excellent in properties such as toughness, heat resistance, gas barrier properties, and chemical stability, it is possible to produce a pneumatic tire having imparted excellent properties such as toughness, heat resistance, gas barrier properties, and chemical stability, resulting from the layer of the polyimide resin. Moreover, when the layer of the unvulcanized rubber composition which constitutes the laminate according to the present invention is vulcanized under the condition where the layer of the unvulcanized rubber composition is stacked on or disposed adjacent to another unvulcanized rubber shaped article having an arbitrary form such as a sheet or film form, an vulcanization reaction also occurs between the layer of the unvulcanized rubber composition and the unvulcanized rubber shaped article, thereby developing a strong adhesion between the rubber composition layer and the unvulcanized rubber shaped article. Therefore, according to the present invention, a layer of a polyimide resin can be firmly bonded to other rubber shaped articles, for example, other rubber members which constitute a pneumatic tire via the rubber composition layer, and as a result, a composite having excellent properties such as toughness, heat resistance, gas barrier properties, and chemical stability can be obtained in a simple manner.

### DESCRIPTION OF EMBODIMENTS

Hereinafter, the present invention will be described in detail.

### [Polyimide Resin]

Regarding the layer of the polyimide resin in the laminate according to the present invention, the polyimide resin is a polymeric compound having an imide bond obtained by thermal or chemical imidization of a polyimide precursor obtained from a tetracarboxylic dianhydride and a diamine, and may be one which is known in the art.

Examples of the tetracarboxylic dianhydride include aromatic tetracarboxylic dianhydrides, aliphatic tetracarboxylic dianhydrides, alicyclic tetracarboxylic dianhydrides, etc. Specific examples of the tetracarboxylic dianhydride component include 3,3',4,4'-biphenyltetracarboxylic dianhydride, pyromellitic dianhydride, 3,3',4,4'-oxydiphthalic acid dianhydride, diphenylsulfone-3,4,3',4'-tetracarboxylic dianhydride, bis(3,4-dicarboxyphenyl)sulfide dianhydride, 2,2-bis (3,4-dicarboxyphenyl)-1,1,1,3,3,3-hexafluoropropane dianhydride, etc. Tetracarboxylic dianhydrides may be used alone or in combination of two or more of them.

Examples of the diamine include aromatic diamines, aliphatic diamines, alicyclic diamines, etc. Specific examples of the diamine include *p*-phenylenediamine, 4,4'-diaminodiphenyl ether, 3,4'-diaminodiphenyl ether, *m*-toluidine, *p*-toluidine, 5-amino-2-(*p-*aminophenyl)benzoxazole, 4,4'-diaminobenzanilide, 1,3-bis(4-aminophenoxy)benzene, 1,4-bis(3-aminophenoxy)benzene, 1,4-bis(4-aminophenoxy)benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[4-(4-aminophenoxy) phenyl]propane, etc. Diamines may be used alone or in combination of two or more of them.

Well-known polyimide resins may be used as the polyimide resin. Commercially available polyimide resins that are particularly suitable as an adherent to the rubber composition layer include Upilex^{®} S series and R series manufactured by Ube Industries, Ltd., Kapton^{®} series manufactured by Du Pont-Toray Co., Ltd., etc. Upilex S is a polyimide resin composed mainly of 3,3',4,4'-biphenyl-tetracarboxylic dianhydride as a tetracarboxylic dianhydride component and *p*-phenylenediamine as a diamine component. Upilex R are polyimide resins composed mainly of 3,3',4,4'-biphenyltetracarboxylic dianhydride as a tetracarboxylic dianhydride component and 4,4'-diaminodiphenyl ether as a diamine component. Kapton H is a polyimide resin composed mainly of pyromellitic dianhydride as a tetracarboxylic dianhydride component and 4,4'-diaminodiphenyl ether as a diamine component.

### [Unvulcanized Rubber Composition]

### (A) Rubber Component

Regarding the layer of the unvulcanized rubber composition in the laminate according to the present invention, rubber component (A) contained in the unvulcanized rubber composition is preferably a diene rubber. Specific examples of the diene rubber include natural rubbers (NR), isoprene rubbers (IR), epoxidized natural rubbers, styrene butadiene rubbers (SBR), butadiene rubbers (BR) (high *cis*-BR and low *cis*-BR), acrylonitrile butadiene rubbers (NBR), etc. The diene rubber is preferably selected from natural rubbers (NR), styrene butadiene rubbers (SBR), butadiene rubbers (BR), and combinations of two or more of them, in view of processability as well as the adhesive properties of the unvulcanized rubber composition layer to a rubber sheet.

### (B) Polyamide-Polyether Elastomer

In the present invention, polyamide polyether elastomer (B) contained in the unvulcanized rubber composition is a copolymer comprising a hard segment containing a polyamide and a soft segment containing a polyether. Polyamide-polyether elastomer (B) is preferably a block copolymer comprising a polyamide block as a hard segment and a polyether block as a soft segment. Polyamide polyether elastomer (B) is more preferably a block copolymer comprising an aliphatic polyamide block as a hard segment and an aliphatic polyether block as a soft segment. In a preferred embodiment, polyamide-polyether elastomer (B) has the following general formula (I):

-[Aₖ-X-Bₘ]ₙ- (I)

wherein Aₖ represents a polyamide block, Bₘ represents a polyether block, X represents a linking group that links the polyamide block to the polyether block, and n represents an integer of 1 or more. Among the repeating units [Aₖ-X-Bₘ], the polyamide blocks Aₖ may be the same or different. Preferably, each linking group X is a group independently selected from -CO-NH- and -CO-O-. Polyamide-polyether elastomer (B) preferably has a weight average molecular weight of 1.0 × 10⁴ to 2.0 × 10⁵.

The polyamide blocks Aₖ may be those derived from, for example, the polymerization of one or more polyamide-forming monomers such as lactams, aminocarboxylic acids, a salt of a diamine and a dicarboxylic acid, etc. Examples of the lactams include aliphatic lactams having 5 to 20 carbon atoms, such as *ε*-caprolactam, *ω*-heptalactam, *ω*-capryllactam, *ω*-undecalactam, *ω-*dodecalactam, etc., and preferably aliphatic lactams having 5 to 12 carbon atoms. Examples of the aminocarboxylic acids include aminocarboxylic acids having 5 to 20, preferably 5 to 11 carbon atoms, such as *ω*-aminocaproic acid, *ω*-aminoenanthic acid, *ω*-aminocaprylic acid, *ω-*aminoperconic acid, *ω*-aminocapric acid, 6-aminocaproic acid, 7-aminoheptanoic acid, 9-aminononanoic acid, 11-aminoundecanoic acid, 12-aminododecanoic acid. Examples of the diamine in the salt of a diamine and a dicarboxylic acid include diamines having 2 to 20 carbon atoms, such as ethylenediamine, triethylenediamine, tetraethylenediamine, pentamethylenediamine, hexamethylenediamine, 1,7-diaminoheptane, 1,8-diaminooctane, 1,9-diaminononane, 1,10-diaminodecane, phenylene diamine, meta-xylylene diamine, etc. Examples of the dicarboxylic acid in the salt of a diamine and a dicarboxylic acid include dicarboxylic acids having 2 to 36 carbon atoms, such as oxalic acid, succinic acid, glutaric acid, adipic acid, pimelic acid, sebacic acid, terephthalic acid, isophthalic acid, suberic acid, azelaic acid, nonanedicarboxylic acid, decanedicarboxylic acid, tetradecanedicarboxylic acid, octadecanedicarboxylic acid, fumaric acid, phthalic acid, xylylenedicarboxylic acid, dimer acids (unsaturated dicarboxylic acid having 36 carbon atoms synthesized from unsaturated fatty acids mainly composed of linoleic acid and oleic acid), etc. The salt of a diamine and a dicarboxylic acid is preferably a salt of a diamine and a dicarboxylic acid as illustrated above, and preferably a salt of one selected from the group consisting of ethylenediamine, triethylenediamine, tetraethylenediamine, and hexamethylenediamine, and one selected from the group consisting of oxalic acid, succinic acid, glutaric acid, adipic acid, pimelic acid, sebacic acid, terephthalic acid, and isophthalic acid.

Examples of the polyamide units which constitute the polyamide blocks include ring-opening polymers of lactams, such as polycaprolactam (Nylon 6), polyheptolactam (Nylon 7), polycapryllactam (Nylon 8), polynonanolactam (Nylon 9), polyundecanolactam (Nylon 11), polylauryl lactam (Nylon 12), etc.; ring-opening copolymers such as caprolactam/lauryl lactam copolymer (Nylon 6/12), caprolactam/nonanolactam copolymer (Nylon 6/9), etc.; polycondensates of a diamine with a dicarboxylic acid, such as polyethylenediamine adipamide (Nylon 26), polytetramethylene adipamide (Nylon 46), polyhexamethylene adipamide (Nylon 66), polyhexamethylene sebacamide (Nylon 610), polyhexamethylene dodecamide (Nylon 612), polyoctamethylene adipamide (Nylon 86), polydecamethylene adipamide (Nylon 106), polydecamethylene sebacamide (Nylon 108), ethylenediamine adipamide/hexamethylene adipamide copolymer (Nylon 26/66), etc.; and copolymers of lactam/diamine/dicarboxylic acid, such as caprolactam/hexamethylene adipamide copolymer (Nylon 6/66), lauryl lactam/hexamethylene adipamide copolymer (Nylon 12/66), caprolactam/hexamethylene adipamide/hexamethylene diammonium sebacate copolymer (Nylon 66/610), ethylene ammonium adipate/hexamethylene adipamide/hexamethylene diammonium sebacate copolymer (Nylon 6/66/610), etc. Of these, ring-opening polymers and copolymers of lactams are preferable, and polylauryl lactam (Nylon 12) is particularly preferable.

The polyether blocks Bₘ may be those derived from the polymerization of one or more of polyethers such as polyethylene glycol, polypropylene glycol, polytetramethylene ether glycol, ABA-type triblock polyethers represented by formula (II) below, polyether diamine, etc.

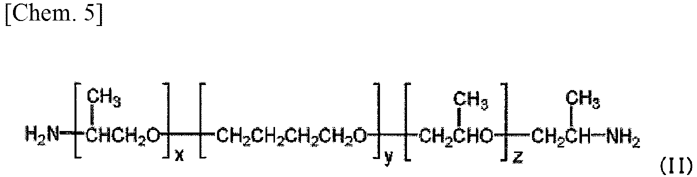

In formula (II) above, x is an integer of 1 to 20, and preferably an integer of 2 to 6, y is an integer of 4 to 50, and preferably an integer of 6 to 12, and z is an integer of 1 to 20, and preferably an integer of 1 to 5.

The number average molecular weight of the hard segment is preferably 300 to 15000, and more preferably 300 to 600. The number average molecular weight of the soft segment is preferably 200 to 6000, and more preferably 650 to 2000. The weight ratio of the hard segment to the soft segment (that is, hard segment:soft segment) is preferably 20:80 to 95:5, and more preferably 30:70 to 80:20.

Examples of the combination of the hard and soft segments include any combination of the hard and soft segments indicated above. Of these, a combination of the ring-opening polycondensation product of lauryl lactam and polyethylene glycol, a combination of the ring-opening polycondensation product of lauryl lactam and polypropylene glycol, a combination of the ring-opening polycondensation product of lauryl lactam and polytetramethylene ether glycol, and a combination of the ring-opening polycondensation product of lauryl lactam and an ABA-type triblock polyether of the above general formula (II) are preferable, and a combination of the ring-opening polycondensation product of lauryl lactam and an ABA-type triblock polyether of the above general formula (II) is particularly preferable. Examples of the polyamide-polyether elastomer comprising a combination of a ring-opening polycondensation product of lauryl lactam and an ABA-type triblock polyether of the above general formula (II) include UBESTA XPA^{®} P9040X1.

The melting point of polyamide-polyether elastomer (B) is not particularly limited, but it preferably has a melting point from 90 to 180°C, and preferably from 90 to 130°C, so that the polyamide polyether elastomer can thermally fuse to a polyimide resin layer at the vulcanization temperature of the unvulcanized rubber.

Polyamide-polyether elastomers as described above are commercially available, and examples of commercially available products include every series of UBESTA XPA^{®} manufactured by Ube Industries, Ltd. Of these, in particular, polyetheramide elastomers UBESTA XPA 9040X1, 9040F1, 9048X1, 9048F1, 9055X1, 9055F1, 9063X1, 9063F1, 9068X1, 9068F1, 9040X2, 9048X2, 9040F2, and 9048F2, 9035X, etc., may preferably be used.

The amount of polyamide-polyether elastomer (B) is from 20 to 100 parts by weight, and preferably 40 to 80 parts by weight, with respect to 100 parts by weight of rubber component (A). If the amount of polyamide polyether elastomer (B) is less than 20 parts by weight with respect to 100 parts by weight of rubber component (A), heating of the laminate according to the present invention at the predetermined temperature described later cannot result in a sufficient improvement in adhesion strength between the polyimide resin layer and the unvulcanized rubber composition layer, and if the amount of polyamide polyether elastomer (B) is more than 100 parts by weight with respect to 100 parts by weight of rubber component (A), it is difficult for the unvulcanized rubber composition layer which constitutes the laminate according to the present invention to result in vulcanization bonding with another rubber sheet after stacking of the laminate with the another rubber sheet.

### (C) Condensate of Substituted or Unsubstituted Phenolic Compound with Formaldehyde

One preferred example of the substituted or unsubstituted phenolic compound represented by formula (1) is one in which at least one of R¹, R², R³, R⁴ and R⁵ is an alkyl group having 1 to 8 carbon atoms and the remainder are hydrogen or an alkyl group having 1 to 8 carbon atoms. Another preferred example of the compound represented by formula (1) is one in which at least one of R¹, R², R³, R⁴ and R⁵ is hydroxyl group and the remainder are hydrogen or an alkyl group having 1 to 8 carbon atoms. The substituted or unsubstituted phenolic compound is more preferably cresol, resorcin, or *para*-octylphenol. Examples of condensate (C) of a substituted or unsubstituted phenolic compound with formaldehyde include cresol-formaldehyde condensates, resorcin-formaldehyde condensates, etc. Moreover, these condensates may be modified as long as the effects of the present invention are not impaired. For example, a modified resorcin-formaldehyde condensate that is modified with an epoxy compound can also be used in the present invention. These condensates are commercially available, and commercially available products can be used in the present invention. Condensate (C) is preferably a cresol-formaldehyde condensate represented by Formula (2) below or a resorcin-formaldehyde condensate represented by Formula (3).

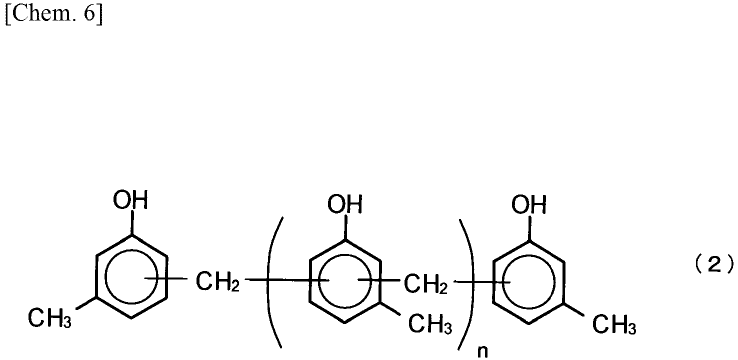

In this formula, n is an integer of 1 to 20, preferably an integer of 1 to 10, and more preferably an integer of 1 to 5.

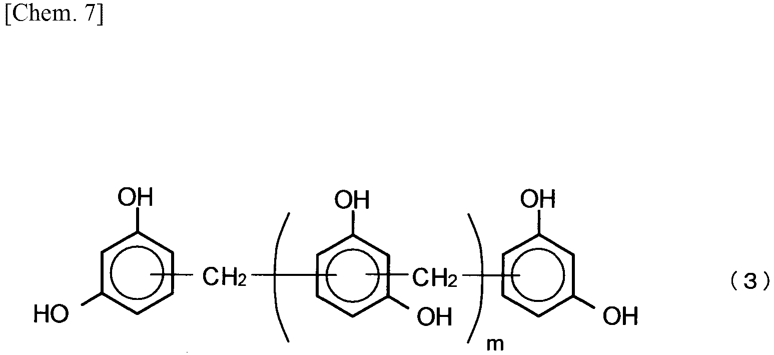

In this formula, m is an integer of 1 to 20, preferably an integer of 1 to 10, and more preferably an integer of 1 to 3.

The amount of condensate (C) is preferably 0.5 to 10 parts by weight, and more preferably 1.5 to 6.0 parts by weight, with respect to 100 parts by weight of rubber component (A). If the amount of condensate (C) is less than 0.5 parts by weight with respect to 100 parts by weight of rubber component (A), heating of the laminate according to the present invention at the predetermined temperature described later cannot result in a sufficient improvement in adhesion strength between the polyimide resin layer and the unvulcanized rubber composition layer, and if the amount of condensate (C) is more than 10 parts by weight with respect to 100 parts by weight of rubber component (A), the resulting rubber composition does not have sufficient elongation properties after vulcanization and therefore tends to be broken.

### (D) Methylene Donor

As used herein, "methylene donor" refers to a basic compound which generates formaldehyde upon heating, etc., and examples of the methylene donor include hexamethylenetetramine, pentamethylenetetramine, hexamethylenediamine, methylolmelamine, etherified methylolmelamines, modified etherified methylolmelamines, esterified methylolmelamines, hexamethoxymethylmelamine, hexamethylolmelamine, hexakis(ethoxymethyl)melamine, hexakis(methoxymethyl)melamine, *N,N',N"*-trimethyl-*N,N',N"*-trimethylolmelamine, *N,N',N"*-trimethylolmelamine, *N*-methylolmelamine, *N,N'-*bis(methoxymethyl)melamine, *N,N'N"*-tributyl-*N,N',N"*-trimethylolmelamine, paraformaldehyde, etc. Preferably, methylene donor (D) is at least one selected from the group consisting of modified etherified methylolmelamines, paraformaldehyde, hexamethylenetetramine, pentamethylenetetramine, and hexamethoxymethylmelamine. Of these, modified etherified methylolmelamines are preferred in view of formaldehyde-releasing temperature.

The amount of methylene donor (D) is 0.25 to 50 parts by weight, and preferably 0.75 to 18 parts by weight, with respect to 100 parts by weight of rubber component (A). If the amount of the methylene donor is less than 0.25 parts by weight with respect to 100 parts by weight of rubber component (A), the reaction of condensate (C) does not proceed sufficiently when the laminate according to the present invention is heated at the predetermined temperature described later, and consequently it is difficult to improve adhesion strength. If the amount of the methylene donor is too much, the vulcanization system of the rubber composition may be adversely affected.

The weight ratio of methylene donor (D) to condensate (C) is preferably from 0.5:1 to 5:1, and preferably from 1:1 to 3:1. If the proportion of methylene donor (D) to condensate (C) is too low, the reaction of condensate (C) does not proceed sufficiently when the laminate according to the present invention is heated at the predetermined temperature described later, and consequently it is difficult to improve adhesion strength. If the proportion of methylene donor (D) to condensate (C) is too high, the vulcanization system of the rubber composition may be adversely affected.

### (E) Vulcanizing Agent

Examples of the vulcanizing agent include inorganic vulcanizing agents and organic vulcanizing agents. Examples of inorganic vulcanizing agents include sulfur, sulfur monochloride, selenium, tellurium, zinc oxide, magnesium oxide, lead monoxide, etc., and examples of organic vulcanizing agents include sulfur-containing organic compounds, dithiocarbamic acid salts, oximes, tetrachloro-*p*-benzoquinone, dinitroso compounds, modified phenolic resins, polyamines, organic peroxides, etc. Of these, sulfur, organic peroxides such as 1,3-bis-(*t*-butylperoxyisopropyl)-benzene, modified phenolic resins such as brominated alkylphenol-formaldehyde condensates, zinc oxide, and sulfur-containing organic compounds are preferred.

The amount of the vulcanizing agent is preferably 0.2 to 5.0 parts by weight, and more preferably 1.0 to 4.0 parts by weight, with respect to 100 parts by weight of rubber component (A). If the amount of the vulcanizing agent is too small, the vulcanization reaction of rubber component (A) does not proceed sufficiently when the laminate according to the present invention is heated at the predetermined temperature described later, and consequently peeling due to material destruction may occur, and if the amount of the vulcanizing agent is too much, premature vulcanization (scorch) may occur prior to the predetermined vulcanization step.

The rubber composition may contain various additives commonly used in rubber compositions, including reinforcing agents (fillers) such as carbon black and silica, vulcanizing agents, vulcanization accelerators, vulcanization accelerator activators, softeners, processing aids, antioxidants, etc., as long as the effects of the present invention are not impaired.

### [Production of Laminate]

The laminate according to the present invention can be produced by stacking a layer of an unvulcanized rubber composition comprising components (A) to (E) as described above on a layer of a polyimide resin as described above to form a laminate (hereinafter referred to as "unvulcanized laminate") comprising the layer of the polyimide resin and the layer of the unvulcanized rubber composition, and then heating the resulting unvulcanized laminate at a predetermined temperature of 120°C to 200°C to vulcanize it, thereby joining, i.e., integrating the layer of the polyimide resin and the layer of the rubber composition. More specifically, the production of the unvucanized laminate can be carried out by the following methods, but is not limited thereto. The unvulcanized laminate is produced by firstly shaping the unvulcanized rubber into a layer by a shaping apparatus such as a T-die extruder, etc., to prepare a layer of the rubber composition, and then stacking a layer of a polyimide resin on the layer of the unvulcanized rubber composition. The integration of the unvulcanized laminate via vulcanization can be carried out within a vulcanization time of, for example, 50 seconds to 320 minutes.

As used herein, "unvulcanized laminate" refers to one in which the layer of the polyimide resin and the layer of the rubber composition, as described above, are stacked with each other, but have not yet been subjected to the heating at the above predetermined temperature for the unvulcanized rubber composition. Here, with respect to "the layer of the polyimide resin layer" and "the layer of the rubber composition", the term "layer" means that the polyimide resin and rubber composition have the form of a sheet or film, and "stacked with each other" means that the layer of the polyimide resin and the layer of the rubber composition are at least partially and directly superposed with each other in the thickness direction thereof.

The thicknesses of the layer of the polyimide resin and the layer of the unvulcanized rubber composition are not particularly limited. When the laminate according to the present invention is used as a reinforcing material for a pneumatic tire, the layer of the polyimide resin and the layer of the unvulcanized rubber composition may have a thickness capable of exerting the effects as a reinforcing material. When the laminate according to the present invention is used as a reinforcing material for, for example, a side portion of a pneumatic tire, the thickness of the layer of the polyimide resin is preferably from 0.1 to 0.3 mm, and the thickness of the layer of the unvulcanized rubber composition is preferably from 0.15 to 2 mm.

In one embodiment, the laminate according to the present invention is a laminate comprising one polyimide resin layer and one unvulcanized rubber composition layer. In another embodiment, the laminate according to the present invention may be a laminate of three or more layers including one or more polyimide resin layers and one or more unvulcanized rubber composition layers that are alternately stacked. That is, the laminate according to the present invention may further comprises at least one polyimide resin layer, at least one unvulcanized rubber composition layer, or at least one polyimide resin layer and at least one unvulcanized rubber composition layer, wherein
(a) n layers (n is an integer of 1 or more) of the polyimide resin and (n+1) layers of the unvulcanized rubber composition are alternately stacked, and both outermost layers are unvulcanized rubber composition layers,
(b) (n+1) layers of the polyimide resin and n layers of the unvulcanized rubber composition are alternately stacked, and both outermost layers are polyimide resin layers, or
(c) m layers (m is an integer of 2 or more) of the polyimide resin and m layers of the unvulcanized rubber composition are alternately stacked.
According to the present invention, a composite in which the polyimide resin layer is combined via the rubber composition layer with any other material having low adhesion properties to the polyimide resin layer but having high adhesion properties to rubber can be produced by superposing the any other material with the outermost unvulcanized rubber composition layer of the laminate according to the present invention, and heating the laminate according to the present invention along with the any other material superposed thereto at the above predetermined temperature. When the laminate according to the present invention is a laminate of three or more layers, each polyimide resin layer and each unvulcanized rubber composition layer respectively can have a thickness within the above range.

A pneumatic tire can be produced by a conventional process using a laminate according to the present invention. For example, when a green tire is formed by sequentially overlaying unvulcanized rubber members for producing a tire, such as inner liner, carcass, belt, tread, etc., on a tire molding drum and molding them, a laminate according to the present invention having a desired shape is used as one or more of these unvulcanized rubber members, and the green tire is vulcanized, thereby capable of producing a pneumatic tire using the laminate according to the present invention.

### EXAMPLES

### <Preparation of Laminate>

Upilex 50VT (a film having a thickness of 0.1 mm) available from Ube Industries, Ltd. was used as received as a polyimide resin layer without any surface treatment.

The components in the formulations (parts by weight) shown in Table 1 below, other than sulfur, a vulcanization accelerator and zinc oxide, were kneaded for 5 minutes with a 1.7 liter sealed-type Banbury mixer, and then the resulting kneaded material was released from the Banbury mixer and allowed to cool to room temperature. Subsequently, sulfur, a vulcanization accelerator and zinc oxide were blended to the kneaded material with an open roll mixer to prepare an unvulcanized rubber composition. The resulting unvulcanized rubber composition was extruded as a layer having a thickness of 1.2 mm onto the polyimide resin layer by a T-die extruder (extrusion temperature: 120°C) to prepare a laminate.

Raw materials for rubber composition:
SBR: Nipol^{®} 1502 manufactured by Nippon Zeon Co., Ltd.
NR: SIR-20
Carbon black: Seast V manufactured by Tokai Carbon Co., Ltd.
Stearic acid: Industrial stearic acid manufactured by Chiba Fatty Acid Co., Ltd.
Aromatic oil: Desolex No. 3 manufactured by Showa Shell Sekiyu K.K.
Zinc oxide: Zinc oxide type III manufactured by Seido Chemical Industry Co., Ltd.
Polyamide-polyether elastomer: UBESTA XPA P9040X1 manufactured by Ube Industries, Ltd. [m.p.: about 110°C, number average molecular weight: 2.0 × 10⁴, hard segment:soft segment weight ratio = 40:60]
Modified resorcin-formaldehyde condensate: Sumikanol 620 manufactured by Taoka Chemical Co., Ltd.
Methylene donor: Modified etherified methylolmelamine resin (Sumikanol 507AP manufactured by Taoka Chemical Co., Ltd.)
Sulfur: 5% Oil-extended sulfur manufactured by Karuizawa Refinery Ltd.
Vulcanization accelerator: Di-2-benzothiazolyl disulfide (Nocceler DM manufactured by Ouchi Shinko Chemical Industrial Co., Ltd.)

### <Evaluation on Laminate>

Peel Strength Test:
The laminates of the Examples and Comparative Examples prepared as described above were vulcanized at 170°C for 10 minutes under pressing at a pressure of 4 MPa within a pressing machine. Strip-shaped specimens having a length of 125 mm and a width of 25 mm were cut out from the vulcanized laminates and were measured for the peel strength (N/25 mm) between the polyimide resin layer and the rubber composition layer in accordance with JIS K6256-1. The measured values of peel strength are shown in Table 1 below.

[Table 1]

**Table 1. Formulations (in parts by weight) and peel strength test results for unvulcanized rubber compositions of the Examples and Comparative Examples.**

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Ex. 1 | Ex. 2 | Ex. 3 |
|---|---|---|---|---|---|---|---|---|---|---|---|
| SBR | 50 | 50 | 50 | 50 | 50 | 50 | 50 | 50 | 50 | 50 | 50 |
| NR | 50 | 50 | 50 | 50 | 50 | 50 | 50 | 50 | 50 | 50 | 50 |
| Carbon black | 60 | 60 | 60 | 50 | 50 | 50 | 50 | 50 | 60 | 60 | 60 |
| Stearic acid | 1 | 1 | 1 | 1 | 1 | 1 | 1 | 1 | 1 | 1 | 1 |
| Aromatic oil | 7 | 7 | 7 | 7 | 7 | 7 | 7 | 7 | 7 | 7 | 7 |
| Zinc oxide | 3 | 3 | 3 | 3 | 3 | 3 | 3 | 3 | 3 | 3 | 3 |
| Polyamide-polyether elastomer | - | - | 10 | 20 | 40 | 60 | 80 | 100 | 20 | 40 | 60 |
| Modified resorcin-formaldehyde condensate | - | 2 | 2 | - | - | - | - | - | 2 | 2 | 2 |
| Methylene donor | - | 4 | 4 | - | - | - | - | - | 4 | 4 | 4 |
| Sulfur | 2 | 2 | 2 | 2 | 2 | 2 | 2 | 2 | 2 | 2 | 2 |
| Vulcanization accelerator | 1.5 | 1.5 | 1.5 | 1.5 | 1.5 | 1.5 | 1.5 | 1.5 | 1.5 | 1.5 | 1.5 |
| Peel strength (N/25 mm) | 3 | 4 | 16 | 10 | 15 | 18 | 22 | 25 | 62 | 67 | 73 |

Table 1 shows that Examples 1 to 3 in which the unvulcanized rubber composition layer contains a polyamide-polyether elastomer in an amount within the scope of the present invention along with the condensate (C) and methylene donor (D) described above exhibited a better peel strength, i.e., a better adhesion strength, as compared to Comparative Examples 1 to 6.

### INDUSTRIAL APPLICABILITY

The laminate according to the present invention is useful as a reinforcing material for pneumatic tires and can suitably be used for the production of pneumatic tires. The pneumatic tire manufactured using the laminate according to the present invention can suitably be used as an automobile tire.

## Claims

1. A laminate comprising a layer of a polyimide resin and a layer of an unvulcanized rubber composition, wherein the unvulcanized rubber composition comprises:
(A) a rubber component,
(B) 20 to 100 parts by weight of a polyamide-polyether elastomer with respect to 100 parts by weight of the rubber component (A),
(C) a condensate of a substituted or unsubstituted phenolic compound represented by the following formula (1): 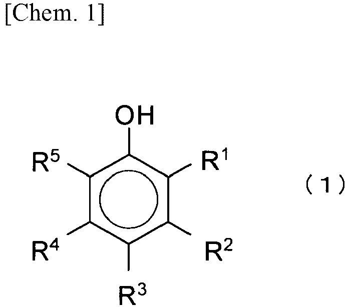 wherein R¹, R², R³, R⁴ and R⁵ are independently selected from the group consisting of hydrogen, hydroxyl group, alkyl groups having 1 to 8 carbon atoms, hydroxyalkyl groups having 1 to 8 carbon atoms, and alkoxide groups having 1 to 8 carbon atoms, with formaldehyde,
(D) a methylene donor, and
(E) a vulcanizing agent.

2. The laminate according to claim 1, wherein the amount of the condensate (C) is from 0.5 to 10 parts by weight with respect to 100 parts by weight of rubber component (A), the amount of the methylene donor (D) is from 0.25 to 50 parts by weight with respect to 100 parts by weight of the rubber component (A), and the weight ratio of the methylene donor (D) to the condensate (C) is from 0.5:1 to 5:1.

3. The laminate according to claim 1 or 2, wherein the methylene donor (D) is at least one selected from the group consisting of modified etherified methylolmelamines, paraformaldehyde, hexamethylenetetramine, pentamethylenetetramine, and hexamethoxymethy lmelamine.

4. The laminate according to any one of claims 1 to 3, wherein the polyamide-polyether elastomer (B) is a copolymer comprising a hard segment containing a polyamide and a soft segment containing a polyether.

5. The laminate according to any one of claims 1 to 4, wherein the condensate (C) is represented by formula (2): 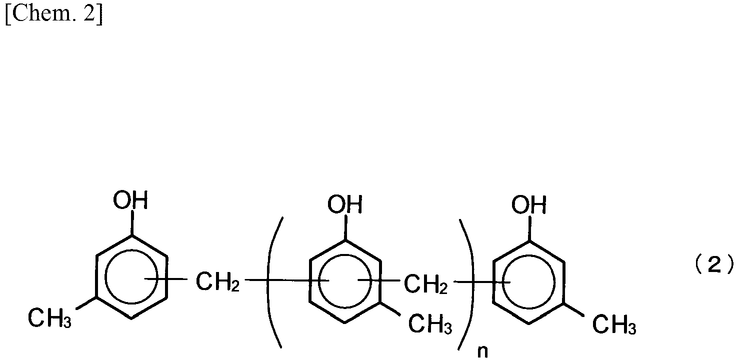 wherein n is an integer of 1 to 20; or
formula (3): 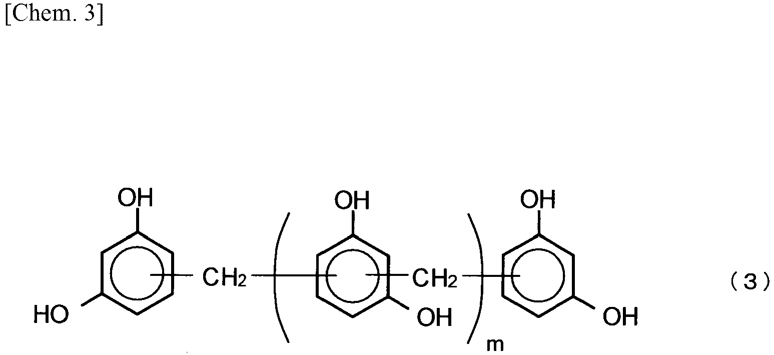 wherein m is an integer of 1 to 20.

6. The laminate according to any one of claims 1 to 5, wherein the rubber component (A) is a diene rubber.

7. A method for producing a pneumatic tire comprising:
forming a green tire comprising the laminate according to any one of claims 1 to 6, and
vulcanizing the green tire.

## Patentansprüche

1. Laminat, enthaltend eine Schicht aus einem Polyimidharz und eine Schicht aus einer nicht-vulkanisierten Kautschukzusammensetzung, worin die nicht-vulkanisierte Kautschukzusammensetzung enthält:
(A) eine Kautschukkomponente,
(B) 20 bis 100 Gewichtsteile eines Polyamid-Polyether-Elastomers in Bezug auf 100 Gewichtsteile der Kautschukkomponente (A),
(C) ein Kondensat aus einer substituierten oder unsubstituierten phenolischen Verbindung mit der folgenden Formel (1): 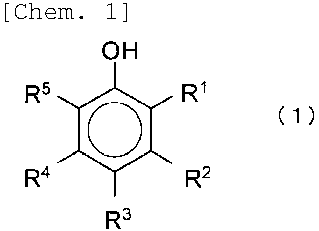 worin R¹, R², R³, R⁴ und R⁵ unabhängig ausgewählt sind aus der Gruppe bestehend aus Wasserstoff, Hydroxylgruppe, Alkylgruppen mit 1 bis 8 Kohlenstoffatomen, Hydroxyalkylgruppen mit 1 bis 8 Kohlenstoffatome und Alkoxidgruppen mit 1 bis 8 Kohlenstoffatomen, und Formaldehyd,
(D) einen Methylendonor und
(E) ein Vulkanisationsmittel.

2. Laminat nach Anspruch 1, worin die Menge des Kondensates (C) von 0,5 bis 10 Gewichtsteile in Bezug auf 100 Gewichtsteile der Kautschukkomponente (A) ist, die Menge des Methylendonors (D) von 0,25 bis 50 Gewichtsteile in Bezug auf 100 Gewichtsteile der Kautschukkomponente (A) ist und das Gewichtsverhältnis des Methylendonors (D) zum Kondensat (C) von 0,5:1 bis 5:1 ist.

3. Laminat nach Anspruch 1 oder 2, worin der Methylendonor (D) zumindest einer ist, ausgewählt aus der Gruppe bestehend aus modifizierten veretherten Methylolmelaminen, Paraformaldehyd, Hexamethylentetramin, Pentamethylentetramin und Hexamethoxymethylmelamin.

4. Laminat nach einem der Ansprüche 1 bis 3, worin das Polyamid-Polyether-Elastomer (B) ein Copolymer ist, das ein hartes Segment mit einem Polyamid und ein weiches Segment mit einem Polyether enthält.

5. Laminat nach einem der Ansprüche 1 bis 4, worin das Kondensat (C) durch die Formel (2): 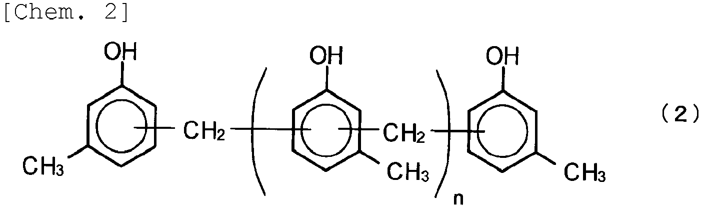 worin n eine ganze Zahl von 1 bis 20 ist, oder die Formel (3) dargestellt ist: 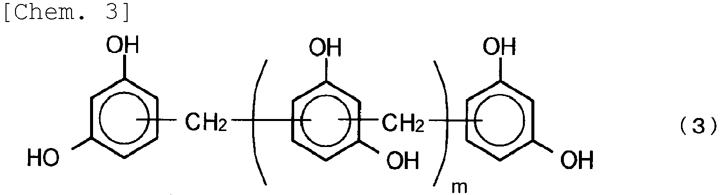 worin m eine ganze Zahl von 1 bis 20 ist.

6. Laminat nach einem der Ansprüche 1 bis 5, worin die Kautschukkomponente (A) ein Dienkautschuk ist.

7. Verfahren zur Erzeugung eines pneumatischen Reifens, enthaltend: die Bildung eines Grünreifens, enthaltend das Laminat nach einem der Ansprüche 1 bis 6 und das Vulkanisieren des Grünreifens.

## Revendications

1. Stratifié comprenant une couche de résine polyimide et une couche d'une composition de caoutchouc non vulcanisé, dans lequel la composition de caoutchouc non vulcanisé comprend :
(A) un composant de caoutchouc,
(B) de 20à 100 parties en poids d'un élastomère polyamide-polyéther par rapport à 100 parties en poids du composant de caoutchouc (A),
(C) un condensat d'un composé phénolique substitué ou non substitué représenté par la formule (1) suivante : 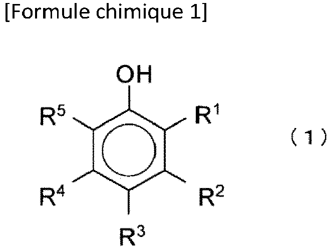 dans lequel R¹, R², R³, R⁴ et R⁵ sont indépendamment sélectionnés dans le groupe consistant en l'hydrogène, le groupe hydroxyle, les groupes alkyles présentant de 1 à 8 atomes de carbone, les groupes hydroxyalkyles présentant de 1 à 8 atomes de carbone, et les groupes alcoxydes présentant de 1 à 8 atomes de carbone, avec formaldéhyde,
(D) un donneur de méthylène, et
(E) un agent de vulcanisation.

2. Stratifié selon la revendication 1, dans lequel la quantité du condensat (C) est de 0,5 à 10 parties en poids par rapport à 100 parties en poids du composant de caoutchouc (A), la quantité du donneur de méthylène (D) est de 0,25 à 50 parties en poids par rapport à 100 parties en poids du composant de caoutchouc (A), et le rapport de poids du donneur de méthylène (D) sur le condensat (C) est de 0,5:1 à 5:1.

3. Stratifié selon la revendication 1 ou 2, dans lequel le donneur de méthylène (D) est au moins l'un sélectionné dans le groupe consistant en des méthylolmélamines éthérifiées modifiées, de la paraformaldéhyde, d'hexaméthylènetétramine, de la pentaméthylènetétramine, et de l'hexaméthoxyméthylmélamine.

4. Stratifié selon l'une quelconque des revendications 1 à 3, dans lequel l'élastomère polyamide-polyéther (B) est un copolymère comprenant un segment dur contenant un polyamide et un segment mou contenant un polyéther.

5. Stratifié selon l'une quelconque des revendications 1 à 4, dans lequel le condensat (C) est représenté par la formule (2) : 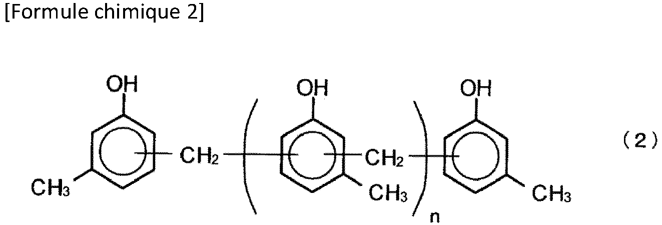 dans lequel n est un entier de 1 à 20 ; ou
la formule (3) : 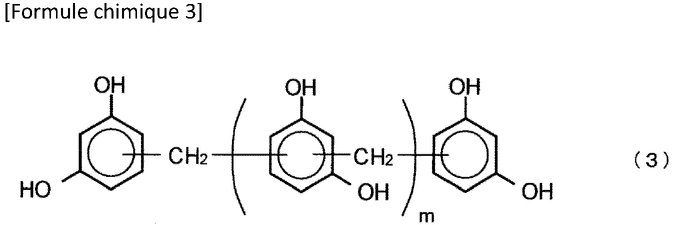 dans lequel m est un entier de 1 à 20.

6. Stratifié selon l'une quelconque des revendications 1 à 5, dans lequel le composant de caoutchouc (A) est un caoutchouc diénique.

7. Procédé de production d'un pneumatique comprenant :
la formation d'un pneumatique cru comprenant le stratifié selon l'une quelconque des revendications 1 à 6, et
la vulcanisation du pneumatique cru.
